# EUROPÄISCHE PATENTANMELDUNG

(11) **EP 0 522 437 A2**
(43) Veröffentlichungstag der Anmeldung: **13.01.1993**
(21) Anmeldenummer: 92111170.4
(22) Anmeldetag: 02.07.1992
(51) Int. Cl.: A01G 31/00, C03C 1/00, C03C 1/02, C04B 28/34

(54) **Mineralwolle-Formkörper**

(30) Priorität: 02.07.1991 DE 4121903
(71) Anmelder: Deutsche Rockwool Mineralwoll-GmbH, D-45966 Gladbeck (DE)
(72) Erfinder: Klose, Gerd-Rüdiger, Dr.-Ing., W-4270 Dorsten 19 (DE)
(74) Vertreter: Köhne, Friedrich, Dipl.-Ing.

(57) **Zusammenfassung**

Mineralwolle-Formkörper, die als Substrat im Pflanzenanbau bestimmt sind, enthalten ein unter Hitzebehandlung aushärtbares Bindemittel. Außerdem werden in Wasser gelöste oder dispergierte Nährstoffe eingebracht.

Um einen Mineralwolle-Formkörper zu schaffen, der ohne umweltschädliche Folgen hergestellt, zum Einsatz gebracht und später nach Gebrauch wieder entsorgt werden kann, wird vorgeschlagen, daß als Bindemittel ausschlielich in Wasser dispergiertes Aluminiummetaphosphat oder in Wasser gelöstes Monoaluminiumphosphat verwendet wird.

## Beschreibung

Die Erfindung bezieht sich auf einen Mineralwolle-Formkörper, der als Substrat im Pflanzenanbau bestimmt ist, welcher ein unter Hitzebehandlung aushärtbares Bindemittel enthält und in welchen in Wasser gelöste oder dispergierte Nährstoffe eingebracht sind.

Die Vermehrung, Aufzucht und Nutzung von leistungsfähigen Pflanzen, wie beispielsweise Blumen, Gemüsepflanzen, Ziersträuchern usw. erfolgt durch Intensivverfahren. Durch gentechnische Veränderungen des Erbguts der Pflanzen, aber vor allen Dingen auch durch die Konzentration vieler Pflanzen über größere Anbauflächen werden die Pflanzen gegenüber z. B. Viren, Bakterien und sonstigen Schädlingen anfällig. Um einen Massenbefall der Pflanzen und deshalb hohe wirtschaftliche Schäden zu vermeiden, muß der als Substrat verwendete Boden regelmäßig beispielsweise mittels Heißdampf oder Chemikalien entkeimt werden. Diese Maßnahmen sind entweder energetisch aufwendig oder die verwendeten Chemikalien können Wasser, insbesondere im Laufe der Zeit das Grundwasser, den Boden oder die Luft kontaminieren, was also zu einer erheblichen Umweltbelastung bzw. -verschmutzung führen kann.

Des weiteren ist bekannt, anstelle eines Bodensubstrats Mineralwolle-Formkörper der zu Anfang angegebenen Art zu verwenden.

Derartige Mineralwolle-Formkörper, meist in Kubus- oder Quaderform, bestehen vorzugsweise aus alkaliarmen Steinwollen, die wiederum vor allem aus Basalten, Diabasgesteinen, allein oder in Mischung beider Gesteine, unter Verwendung von beispielsweise geringen Anteilen Kalkgestein oder Dolomit verschmolzen werden. Aus der Schmälze werden dann mit üblichen Verfahren und Vorrichtungen Mineralfasern hergestellt. Gleichzeitig wird in feiner Verteilung Bindemittel und ggf. Wasser aufgesprüht. Die Abkühlungsgeschwindigkeit der Mineralfasern wird dabei so beschleunigt, daß diese mit Sicherheit glasig erstarren und die Temperaturen letztlich so niedrig sind, daß es nicht zu einer Verhärtung der Bindemittelfilme oder -tröpfchen auf den Fasern in den sogenannten Sammelkammern kommt. Verfahrensbedingt müssen die einzelnen Mineralfasern in den Sammelkammern aufgefangen werden. Sie werden anschließend zu der gewünschten Dicke aufgeschichtet und in einem kontinuierlich weiterbewegten und konstanten Faserstrom einem Härteofen zugeführt. Auf dem Wege hierhin und auch in dem Härteofen selbst wird durch einen vorgegebenen Abstand der Druckbänder und die vorgegebene Faserstromdichte die entsprechende Rohdichte, Dicke und Struktur der späteren Mineralwolle eingestellt. Durch Heißluft wird in dem Härteofen das Bindemittel ausgehärtet. Sodann erfolgt die Aufteilung der Mineralwolle-Bahnen in Formkörper.

Bei dem bekannten Verfahren werden die einzelnen, glasig erstarrten Monofile, d. h. die einfachen Fasern untereinander mit Phenolharzen oder Phenol-Formaldehyd-Harnstoffharzen gebunden. Die Fasermasse ist durch die Verwendung dieser organischen Bindemittel mehr oder weniger hydrophob, d. h. wasserabstoßend. Um die in Wasser gelösten bzw. dispergierten Nährstoffe gleichmäßig in der Fasermasse zu verteilen bzw. den Pflanzenwurzeln zuzuführen, muß der Mineralwolle-Formkörper vor der Benutzung mit oberflächenaktiven Substanzen imprägniert werden.

Die Nutzung der Mineralwolle-Formkörper als Substrat im Pflanzenanbau ist jeweils auf eine Pflanzengeneration beschränkt, d. h. die Mineralwolle-Formkörper können nicht mehrfach hintereinander für die Bepflanzung verwendet werden. Daraus ergibt sich das Problem, daß die Mineralwolle-Formkörper nach einmaliger Anwendung zum Abfall werden, so daß eine Entsorgung erfolgen muß. Da diese Mineralwolle-Formkörper Massenartikel sind, man denke nur beispielsweise an den millionenfachen Einsatz in Großgärtnereien und dergleichen, wurde bisher noch kein zufriedenstellender Weg zur Entsorgung dieser Massenprodukte gefunden.

Die Ablagerung auf Deponien ist unter anderem wegen der verhältnismäßig niedrigen Rohdichte der Mineralwolle-Formkörper volkswirtschaftlich nicht sinnvoll. Es sind auch nicht genügend geeignete Deponien vorhanden, auf denen dieser großvolumige Abfall abgelagert werden könnte. Es wäre daher wünschenswert, wenn eine umweltgerechte Entsorgung durch Wiederverwendung der großen Fasermasse, insbesondere durch Wiederaufschmelzen der Fasern, erfolgen könnte. Bei der thermischen Behandlung der Mineralwolle-Formkörper entstehen jedoch infolge der oben erläuterten organischen Beimengungen, vor allem des organischen Bindemittels, unerwünschte Zersetzungsprodukte. Diese vielfach gesundheitsschädlichen Zersetzungsprodukte können aber die Umgebungsluft, das Wasser bis hin zum Grundwasser sowie den Boden und das Schmälzprodukt als solches kontaminieren, d. h. verschmutzen oder umweltschädlich beeinflussen. Es wären zwar Rauchgasreinigungsanlagen denkbar, in denen die Zersetzungsprodukte in weitgehend unschädliche Verbindungen zerlegt werden, jedoch sind derartige Rauchgasreinigungsanlagen außerordentlich kostenaufwendig, sowohl in Bezug auf die Baukosten als auch hinsichtlich der Bedienung, Wartung usw.

Der Erfindung liegt demgemäß die Aufgabe zu Grunde, einen Mineralwolle-Formkörper zu schaffen, der ohne umweltschädliche Folgen hergestellt, zum Einsatz gebracht und später nach Gebrauch wieder in einfacher Weise entsorgt werden kann. Ausgehend von dem zu Anfang angegebenen Mineralwolle-Formkörper wird die gestellte Aufgabe gelöst durch die Merkmale des Anspruchs 1.

Eine alternative Lösung gibt der Anspruch 2 an.

Auf diese Weise ergeben sich mehrere wesentliche Vorteile. Der erfindungsgemäße Mineralwolle-Formkörper ist von Natur aus hydrophil, d. h. wasseranziehend. Es brauchen also vor der Benutzung des Mineralwolle-Formkörpers als Substrat keine oberflächenaktiven Substanzen durch Imprägnieren od. dgl. zugegeben zu werden. Der Mineralwolle-Formkörper enthält also keinerlei Schmälzmittel mehr, die bei bekannten Mineralwolle-Formkörpern die wasserabstoßende Wirkung der bisherigen organischen Bindemittel aufheben mußten. Bei der späteren Entsorgung entstehen keine umweltschädlichen Zersetzungsprodukte. Je nach späterer Verwendung und Aufbereitung kann das im Anspruch 1 oder 2 angegebene Bindemittel durch eine differenzierte thermische Behandlung der Mineralwolle in eine mehr oder weniger wasserlösliche bis hin zur wasserunlöslichen Form, d. h. bis zu Phosphatglas, gebracht werden.

Vorteilhafterweise beträgt der Bindemittelanteil etwa 3 Masse-% bis 20 Masse-%, bezogen auf die Gesamtmasse aus Mineralwolle und Bindemittel. Bevorzugt wird ein Bindemittelanteil von 7 Masse-% bis 12 Masse-%.

Eine bevorzugte Ausführung des Mineralwolle-Formkörpers wird dadurch erreicht, daß als Mineralwolle Steinwolle mit einer Rohdichte von etwa 40 kg/m³ bis 80 kg/m³ vorgesehen ist. Hierbei ergibt sich eine besonders gute und dauerhafte Bindung zwischen dem Bindemittel einerseits und den Fasern der Steinwolle andererseits, was für die Lagerhaltung, den Transport und die Verwendung als Substrat wichtig ist.

Des weiteren hat sich als vorteilhaft erwiesen, daß zur Erzielung einer großen spezifischen Oberfläche der Mineralwolle-Fasermasse die mittleren Faserdurchmesser zu etwa 4 µm bis 5 µm gewählt sind. Auf diese Weise werden die Nährstoffe besonders gut verteilt und den Pflanzenwurzeln zugeführt.

Eine weitere vorteilhafte Ausgestaltung besteht darin, daß etwa 1 Masse-% bis 5 Masse-%, bezogen auf die Gesamtmasse, an Natriumpolyphosphat als Puffer mit möglichst gleichmäßiger Verteilung zugegeben ist.

Eine weitere vorteilhafte Ausgestaltung ergibt sich dadurch, daß dem Bindemittel Spurenelemente, wie Eisen oder Kobalt, die für das Pflanzenwachstum wichtig sind, zugegeben sind.

Die Erfindung betrifft ferner ein Verfahren zur umweltverträglichen Entsorgung von Mineralwolle-Formkörpern, wie sie in einem der Ansprüche 1 bis 8 gekennzeichnet sind. Das Verfahren enthält die folgenden Verfahrensschritte:
daß die Mineralwolle-Formkörper
a) von Pflanzenresten befreit,
b) einer thermischen Behandlung ausgesetzt und
c) zerkleinert werden, daß
d) das zerkleinerte Produkt mit einem Bindemittel versehen und zu Formkörpern verpreßt wird, daß
e) die so gebildeten Formkörper aufgeschmolzen werden, und daß
f) die Schmälze zu Mineralfasern und diese zu Mineralwolle verarbeitet werden.

Auf diese Weise erhält man wieder ein Ausgangsmaterial, welches entweder für die Herstellung von Mineralwolle-Formkörpern als Substrat nach der Erfindung verwendet werden kann oder welches auch zu anderen Zwecken, beispielsweise zur Herstellung von Dämmmaterial zur Wärme- und/oder Schalldämmung verwendbar ist.

Ein anderes erfindungsgemäßes Verfahren zur umweltverträglichen Entsorgung von Mineralwolle-Formkörpern ist dadurch gekennzeichnet, daß die Mineralwolle-Formkörper
a) zerkleinert werden, daß
b) das zerkleinerte Produkt vorzugsweise in einer Wirbelschicht oder in einem Heißluftstrom bis in die Nähe des Rekristallisationsbereichs erhitzt wird, derart, daß die Fasern der Mineralwolle destabilisiert werden, und daß
c) eine weitere Zerkleinerung bis auf eine Faserlänge von weniger als 10 µm vorgenommen wird.

Auf diese Weise ergibt sich ein hochdisperses Material, das als Düngemittel oder zur Bodenverbesserung eingesetzt werden kann.

In jedem Fall ist eine vollständige Wiederverwendung der gesamten Masse der Mineralwolle-Formkörper möglich.

Die Erfindung bezieht sich schließlich auch auf die Verwendung von Aluminiummetaphosphat Al(PO₃)₃ oder Monoaluminiumphosphat als ausschließliches Bindemittel für Mineralwolle-Formkörper zu einem Anteil von 3 Masse-% bis 20 Masse-%, vorzugsweise 7 Masse-% bis 12 Masse-%, bezogen auf die Gesamtmasse aus Mineralwolle und Bindemittel.

## Patentansprüche

1. Mineralwolle-Formkörper, der als Substrat im Pflanzenanbau bestimmt ist, welcher ein unter Hitzebehandlung aushärtbares Bindemittel enthält und in welchen in Wasser gelöste oder dispergierte Nährstoffe eingebracht sind, dadurch gekennzeichnet, daß als Bindemittel ausschließlich in Wasser dispergiertes Aluminiummetaphosphat Al(PO₃)₃ vorgesehen ist.

2. Mineralwolle-Formkörper, der als Substrat im Pflanzenanbau bestimmt ist, welcher ein unter Hitzebehandlung aushärtbares Bindemitttel enthält und in welchen in Wasser gelöste oder dispergierte Nährstoffe eingebracht sind, dadurch gekennzeichnet, daß als Bindemittel ausschließlich in Wasser gelöstes Monoaluminiumphosphat Al(H₂PO₄)₃ vorgesehen ist.

3. Mineralwolle-Formkörper nach Anspruch 1 oder 2, dadurch gekennzeichnet, daß der Bindemittelanteil etwa 3 Masse-% bis 20 Masse-% bezogen auf die Gesamtmasse aus Mineralwolle und Bindemittel beträgt.

4. Mineralwolle-Formkörper nach Anspruch 3, dadurch gekennzeichnet, daß der Bindemittelanteil 7 Masse-% bis 12 Masse-% beträgt.

5. Mineralwolle-Formkörper nach einem der vorhergehenden Ansprüche, dadurch gekennzeichnet, daß als Mineralwolle Steinwolle mit einer Rohdichte von etwa 40 kg/m³ bis 80 kg/m³ vorgesehen ist.

6. Mineralwolle-Formkörper nach einem der vorhergehenden Ansprüche, dadurch gekennzeichnet, daß zur Erzielung einer großen spezifischen Oberfläche der Mineralwolle-Fasermasse die mittleren Faserdurchmesser zu etwa 4 µm bis 5 µm gewählt sind.

7. Mineralwolle-Formkörper nach einem der vorhergehenden Ansprüche, dadurch gekennzeichnet, daß etwa 1 Masse-% bis 5 Masse-%, bezogen auf die Gesamtmasse, an Natriumpolyphosphat als Puffer mit möglichst gleichmäßiger Verteilung zugegeben ist.

8. Mineralwolle-Formkörper nach einem der vorhergehenden Ansprüche, dadurch gekennzeichnet, daß dem Bindemittel Spurenelemente, wie Eisen oder Kobalt, die für das Pflanzenwachstum wichtig sind, zugegeben sind.

9. Verfahren zur umweltverträglichen Entsorgung von Mineralwolle-Formkörpern nach einem der Ansprüche 1 bis 8, dadurch gekennzeichnet, daß die Mineralwolle-Formkörper
a) von Pflanzenresten befreit,
b) einer thermischen Behandlung ausgesetzt und
c) zerkleinert werden, daß
d) das zerkleinerte Produkt mit einem Bindemittel versehen und zu Formkörpern verpreßt wird, daß
e) die so gebildeten Formkörper aufgeschmolzen werden, und daß
f) die Schmälze zu Mineralfasern und diese zu Mineralwolle verarbeitet werden.

10. Verfahren zur umweltverträglichen Entsorgung von Mineralwolle-Formkörpern nach einem der Ansprüche 1 bis 7, dadurch gekennzeichnet, daß die Mineralwolle-Formkörper
a) zerkleinert werden, daß
b) das zerkleinerte Produkt vorzugsweise in einer Wirbelschicht oder in einem Heißluftstrom bis in die Nähe des Rekristallisationsbereichs erhitzt wird, derart, daß die Fasern der Mineralwolle destabilisiert werden, und daß
c) eine weitere Zerkleinerung bis auf eine Faserlänge von weniger als 10 µm vorgenommen wird.

11. Verwendung von Aluminiummetaphosphat Al(PO₃)₃ als ausschließliches Bindemittel für Mineralwolle-Formkörper zu einem Anteil von
3 Masse-% bis 20 Masse-%, vorzugsweise 7 Masse-% bis 12 Masse-%, bezogen auf die Gesamtmasse aus Mineralwolle und Bindemittel.

12. Verwendung von Monoaluminiumphosphat Al(H₂PO₄)₃ als ausschließliches Bindemittel für Mineralwolle-Formkörper zu einem Anteil von 3 Masse-% bis 20 Masse-%, vorzugsweise 7 Masse-% bis 12 Masse-%, bezogen auf die Gesamtmasse aus Mineralwolle und Bindemittel.
